# EUROPÄISCHE PATENTSCHRIFT

(11) **EP 0 541 964 B1**
(45) Veröffentlichungstag und Bekanntmachung des Hinweises auf die Patenterteilung: **11.09.1996**
(21) Anmeldenummer: 92117342.3
(22) Anmeldetag: 10.10.1992
(51) Int. Cl.: C08G 59/02, C08G 59/28, C08G 59/14, C08G 18/58, C08G 18/80, C08G 18/71, C08L 63/00

(54) **Modifizierte Polyalkoxyepoxidharze, Verfahren zu ihrer Herstellung und ihre Verwendung**
Modified polyalkoxy epoxide resins, process for their preparation and their use
Résines de polyalcoxyépoxyde modifiées, procédé de leur préparation et leur utilisation

(30) Priorität: 11.11.1991 DE 4136943
(43) Veröffentlichungstag der Anmeldung: 19.05.1993
(73) Patentinhaber: Witco GmbH, D-59180 Bergkamen (DE)
(72) Erfinder: Neffgen, Bernd, Dr. Dipl.-Chem., W-4714 Selm 4 (DE); Scherzer, Wolfgang, Dr. Dipl.-Chem., W-4712 Werne (DE)

(56) Entgegenhaltungen:
- GB-A- 2 007 672
- US-A- 3 799 797
- US-A- 4 801 662
- US-A- 5 034 435

## Beschreibung

Gegenstand der Erfindung sind modifizierte Polyoxyalkylenepoxidharze auf Basis von mehrwertigen Phenolen, ein Verfahren zu ihrer Herstellung und ihre Verwendung zur Herstellung von stabilen wässrigen Dispersionen.

Auf dem Gebiet der Oberflächenvergütung, wie dem Anstrichsektor und dem Bautenschutz, haben sich Polyglycidylether, insbesondere die höhermolekularen festen Produkte, auf Basis von mehrwertigen Phenolen aufgrund ihrer hervorragenden technologischen Eigenschaften langjährig bewährt. Die Vernetzung mit den auf diesem Gebiet üblichen Härtungsmitteln wie Aminen, Carbonsäuren, Säureanhydriden, Dicyandiamid erfolgte vorwiegend durch deren Einsatz in organischen Lösungsmitteln.

Die gestiegenen Anforderungen an die Umweltverträglichkeit von Beschichtungssystemen haben aber die Mitverwendung dieser bislang gebräuchlichen organischen Lösungsmittel einer kritischen Überprüfung ausgesetzt.

Insbesondere die zu hohe Belastung der Luft und des Wassers haben in den letzten Jahren zu einer Entwicklung von weitgehend wasserbasierten Systemen geführt.

Die Herstellung von wässrigen Dispersionen kann durch Mitverwendung von externen Emulgatoren erfolgen, welche aber unter anderem den Nachteil haben, daß sich die so hergestellten Dispersionen als nicht sehr stabil erwiesen.

In der US-PS 4 446 256 werden Emulgatoren beschrieben, deren hydrophobe Komponente dem zu dispergierenden Harz angepaßt wird und deren hydrophile Komponente über Verknüpfungsbausteine an den Molekülenden angelagert ist. Die mit diesen Verbindungen hergestellten Dispersionen weisen zwar eine verbesserte Stabilität auf, können aber als externe, nichtreaktive Komponenten nicht fest in das ausgehärtete System eingebaut werden.

Die in der WO91/10695 beschriebenen Emulgatoren werden hergestellt, indem hydrophile Moleküle über Verknüpfungsbausteine mit Epoxidgruppen eines Epoxidharzes umgesetzt werden. Damit ist ein Verlust an Epoxidfunktionalität verbunden. Zur Herstellung von vernetzten Systemen können diese Verbindungen daher nur als reaktive Emulgatoren für Epoxidharze gleichen Typs mitverwendet werden.

Aus der DE-OS 36 43 751 sind selbstemulgierende Epoxidharze bekannt, welche so aufgebaut sind, daß an einen langkettigen hydrophilen Molekülteil die Epoxidharze direkt angeknüpft sind. Das Molverhältnis wird so gewählt, daß das Reaktionsprodukt endständige Epoxidgruppen aufweist.

In der US-PS 4 423 201 wird dieses Prinzip so abgeändert, daß die Verknüpfung des hydrophilen Teils in erster Stufe über Isocyanate mit überschüssigen mehrwertigen Phenolen erfolgt und die endständigen phenolischen OH-Gruppen in zweiter Stufe mit flüssigen Glycidylethern zu den entsprechenden Epoxidgruppen aufweisenden mehrwertigen Verbindungen verlängert werden.

Bei Verwendung dieser selbstemulgierenden Glycidylverbindungen kann auf die Mitverwendung zusätzlicher externer Emulgatoren verzichtet werden.

Wie ersichtlich, ist bei diesen Verfahren jedoch pro Mol mehrwertigem Phenol ein relativ hoher Anteil an Alkylenoxid erforderlich, wodurch die physikalischen und chemischen Eigenschaften des vernetzten Endproduktes nachteilig beeinflußt werden können.

Eine Aufgabe der vorliegenden Erfindung war es daher, ein selbstemulgierbares Epoxidharz zu finden, welches ohne Verlust an Epoxidgruppenfunktionalität hergestellt werden und in welchem der Anteil an Alkylenoxid möglichst gering gehalten werden kann.

Diese Aufgabe wird gelöst durch Polyoxyalkylenepoxidharze auf Basis von mehrwertigen Phenolen.

Gegenstand der Erfindung sind daher Verbindungen der allgemeinen Formel I 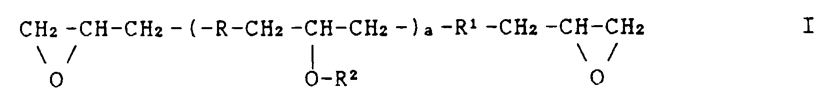 worin bedeuten R, R¹ unabhängig voneinander 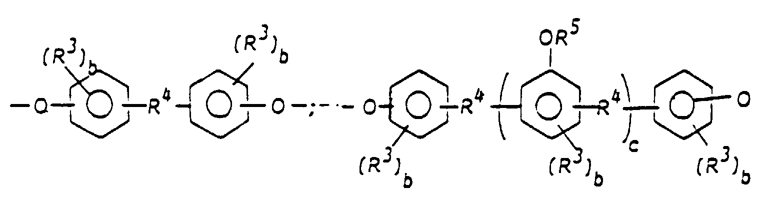 mit
- R³ =: C₁₋₃-Alkylrest,
- R⁴ =: C₁₋₄-Alkylenrest,
- R⁵ =: 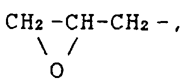
- b =: unabhängig voneinander eine Zahl von 0 - 4,
- c =: 1 - 10,
a = 1 bis 20
R₂ = H und mindestens einmal der Rest 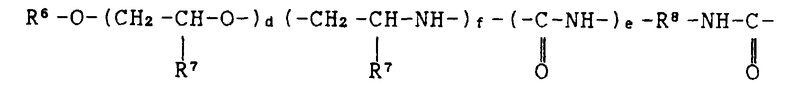 mit
- R⁶ =: C₁₋₅-Alkylrest
- R⁷ =: H oder CH₃-
- d =: 1 - 100
- e =: 0 oder 1
- f =: 0 oder 1
- R⁸ =: aliphatischer, cyclischer, alicyclischer, aromatischer, araliphatischer Kohlenwasserstoffrest.

Ein weiterer Gegenstand der Erfindung sind Verbindungen, welche herstellbar sind durch Umsetzung von Monoalkylethern von Polyoxyalkylendiolen mit difunktionellen Isocyanaten im Molverhältnis von 1 : 1 -1 : 6 in erster Stufe, gegebenenfalls unter Mitverwendung von Katalysatoren und Lösungsmitteln, bei Temperaturen von 40 - 100 °C, gegebenenfalls Abtrennung des überschüssigen Diisocyanats und Lösungsmittels, und weitere Umsetzung des Isocyanatgruppen enthaltenden Monourethans in zweiter Stufe mit Di- und/oder Polyglycidylethern auf Basis von Bisphenolen oder Novolaken im Molverhältnis von 1 : 1 bis a : 1 bei Temperaturen von 40 - 100 °C, gegebenenfalls unter Mitverwendung von Katalysatoren und Lösungsmitteln oder durch Umsetzung von Monoalkylethern von Polyoxyalkylenmonoisocyanaten der allgemeinen Formel 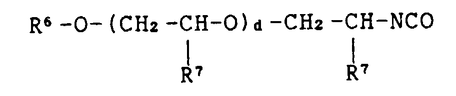 worin R⁶/R⁷ und d die oben angegebene Bedeutung haben, mit Di- und/oder Polyglycidylethern auf Basis von Bisphenolen oder Novolaken im Molverhältnis von 1 : 1 bis a : 1 bei Temperaturen von 40 - 100 °C, gegebenenfalls unter Mitverwendung von Katalysatoren und/oder Lösungsmitteln.

Weitere Gegenstände der Erfindung sind wasserdispergierbare Mischungen, wässrige Dispersionen und härtbare Mischungen, enthaltend mindestens eine der Verbindungen der allgemeinen Formel I, welche gemäß oben angegebenem Verfahren herstellbar sind.

Die erfindungsgemäßen Glycidylether sind selbstemulgierbare Verbindungen, welche allein oder zur Dispergierung der bekannten Glycidylether bzw. Glycidylester verwendet werden können.

Da die hydrophilen Anteile bei den erfindungsgemäßen Verbindungen nicht auf definierte vorgegebene Bereiche des Moleküls, wie Kettenmitte oder Kettenende, beschränkt sind, sondern über den Molekülbereich verteilt werden können, können bei ihrer Mitverwendung einmal stabile Dispersionen mit gegebenenfalls hohen Festkörperanteilen hergestellt werden, welche gegenüber den bekannten Dispersionen eine vorteilhafte Rheologie aufweisen, insbesondere aber Duromere mit verbesserten mechanischen, physikalischen und chemischen Eigenschaften.

Zur Herstellung der erfindungsgemäßen Verbindungen können im Prinzip alle Glycidylverbindungen, welche im Durchschnitt mindestens eine Hydroxylgruppe im Molekül enthalten, mitverwendet werden. Eine Übersicht über diese Verbindungen ist im Handbook of Epoxy Resins, Lee & Neville, 1967, Chapter 2, gegeben.

Erfindungsgemäß bevorzugt werden jedoch die Glycidylether auf Basis von Bisphenolen wie insbesondere Bisphenol-F [Bis-(4,4'-hydroxyphenyl)methan], Bisphenol-A [2,2-Bis-(4,4'-hydroxyphenyl)propan] und Bisphenol C [2,2-Bis-(3,3'-methyl-4,4'-hydroxyphenyl)-propan] mit Epoxidequivalentmassen von ca. 310 bis ca. 2000, vorzugsweise 400 - 800, sowie Glycidylether auf Basis von Novolaken mit ca. 3 - 15 Phenylkernen im Molekül und Epoxidequivalentmassen insbesondere im Bereich von 156 - 175.

Die im ersten Schritt mit Isocyanaten umzusetzenden Monoalkylether von Polyoxyalkylendiolen sind Homopolymere des Ethylenoxids oder Copolymere von Ethylenoxid und Propylenoxid, wobei die Verteilung der beiden Monomeren statisch oder blockweise sein kann. Zur Erzielung von hydrophilen Molekülen ist die Verwendung von reinen Ethylenoxidpolymeren mit 1 - ca. 100, insbesondere 2 - 50, Wiederholungseinheiten bevorzugt. Der über eine Etherbrücke verbundene Rest ist vorzugsweise ein Alkylrest mit 1 - 5 C-Atomen und insbesondere der Methyl- oder Ethylrest.

Die mitverwendbaren Diisocyanate sind die handelsüblichen aliphatischen, cyclischen, alicyclischen, aromatischen oder araliphatischen Isocyanate. Erfindungsgemäß bevorzugt werden aliphatische, cyclische, alicyclische und aromatische Diisocyanate eingesetzt, wie Bis-(p-phenylisocyanat), Bis-(p-phenyl)methylen-diisocyanat, 1,4-Phenylendiisocyanat, 4,4'-Diphenylmethan-diisocyanat, 2,2-Bis-(4,4'-isocyanatophenyl)propan, Hexamethylendiisocyanat und insbesondere solche mit unterschiedlich reaktiven Gruppen wie Isophorondiisocyanat(3,3,5-Trimethyl-1-isocyanato-5-isocyanatomethyl-cyclohexan), Toluylendiisocyanate(2,4(2,6)-Diisocyanato-1-methyl-benzol), 1,3-Phenylendiisocyanat.

Ein oder mehrere dieser Isocyanate werden mit den Monoalkylethern der Polyoxyalkylendiole im Molverhältnis von 1 : 1 bis 6 : 1, gegebenenfalls unter Mitverwendung von Lösungsmitteln wie Xylol, Toluol und Katalysatoren wie N-Methylmorpholin, Dimethylethanolamin, Triethylamin, Di(-n-butyl)zinndiacetat bzw. Di-(n-butyl)zinndilaurat, 1,4-Diaza-bicyclo[2,2,2]octan oder deren Mischungen bei Temperaturen von 40 - 100 °C zu den freie Isocyanatgruppen enthaltenden Monourethanharzen umgesetzt.

Im allgemeinen werden hierbei das Isocyanat und gegebenenfalls das Lösungsmittel und der Katalysator auf die Reaktionstemperatur aufgeheizt und der Hydroxylgruppen enthaltende Polyoxyalkylendiolmonoalkylether zugetropft. Die Reaktion ist im allgemeinen nach ca. 0,5 - 2 h beendet. Danach werden der gegebenenfalls verwendete Isocyanatüberschuß und das Lösungsmittel nach üblichen Verfahren abgetrennt.

In zweiter Stufe wird dieses Reaktionsprodukt im allgemeinen ohne weitere Reinigungsstufen zu der auf Reaktionstemperatur von ca. 40 - 100 °C vorgewärmten und den Katalysator enthaltenden Di- oder Polyglycidylverbindung zugegeben. Beide Komponenten liegen vorzugsweise in Lösungsmitteln wie Xylol und Toluol verdünnt vor.

Bei der Verwendung von Polyoxyalkylenisocyanaten werden diese direkt entsprechend der für die zweite Stufe angegebenen Verfahrensweise mit den Glycidylverbindungen umgesetzt.

Das Verhältnis von Isocyanaten bzw. den Isocyanatgruppen enthaltenden Reaktionsprodukten der ersten Stufe zu den Polyglycidylethern kann innerhalb weiter Bereiche variiert werden.

Die untere Grenze des Bereichs ist dadurch gegeben, daß die Summe aller hydrophilen Anteile (Zahl der Wiederholungseinheiten (d) der allgemeinen Formel I) ausreicht, um das Gesamtmolekül in Wasser selbstdispergierend zu machen. Die erforderliche Summe der hydrophilen Anteile wird mitbestimmt durch das Epoxidequivalentgewicht der Glycidylverbindung, das heißt durch die Zahl der Wiederholungseinheiten (a) der allgemeinen Formel I. Die erforderlichen hydrophilen Anteile können in das Molekül eingebracht werden durch Verknüpfung von wenigen langen oder vielen kurzen oder einer entsprechenden Kombination aus kurzen und langen Polyoxyalkyleneinheiten mit den Hydroxylgruppen der Glycidylverbindungen.

Erfindungsgemäß bevorzugt wird die sinnvolle Kombination aus Polyoxyalkylenderivaten mit abgestuften Kettenlängen.

Die obere Grenze der hydrophilen Anteile ist praktisch nur begrenzt durch die Anforderungen, welche an die mechanischen, physikalischen und chemischen Eigenschaften des Duromeren gestellt werden. So kann - bei ausreichend hohen hydrophilen Anteilen - eine teilweise oder völlige Wasserlöslichkeit der erfindungsgemäßen Verbindungen erzielt werden.

Zur Erzielung einer ausreichenden, insbesondere aber einer verbesserten Chemikalienbeständigkeit sollte der Anteil aber so gering als möglich gehalten werden.

Verbindungen mit höheren hydrophilen Anteilen können mit Anteilen von üblichen Glycidylverbindungen gemischt und zu stabilen wässrigen Dispersionen verarbeitet werden. Vorzugsweise werden hierfür Verbindungen zugemischt, welche eine gleiche oder ähnliche Basis haben wie die erfindungsgemäßen Verbindungen der allgemeinen Formel I, worin a der allgemeinen Formel I auch 0 sein kann.

Die jeweiligen Mischungsverhältnisse sind abhängig von der Struktur der jeweiligen Glycidylverbindungen und können durch einfache orientierende Versuche leicht ermittelt werden.

Die wässrigen Dispersionen werden nach den auf diesem Gebiet üblichen Verfahren hergestellt, gegebenenfalls unter Mitverwendung der üblichen Hilfs- und Zusatzstoffe.

Die in den nachfolgenden Beispielen angegebenen Analysenwerte wurden nach folgenden Vorschriften gemessen:

| | |
|---|---|
| Hydroxylzahl (OH-Zahl): | DIN 53240 |
| Isocyanatzahl (NCO-Zahl): | ASTM-D 1638 |
| Epoxidwert (Ep-Wert): | DIN 53188 |

### Herstellung der erfindungsgemäßen Verbindungen und der wässrigen Dispersionen

### Beispiel 1

In einem 3 Liter-Dreihalskolben, der mit Kühler, Tropftrichter und Rührer ausgestattet ist, werden 1332 g (6 mol) 3,3,5-Trimethyl-1-isocyanato-5-isocyanatomethylcyclohexan (Isophorondiisocyanat) und 0,4 g Dibutylzinndilaurat auf 60 °C erhitzt. Innerhalb von 30 min wird eine Lösung von 120 g (1 mol) Diethylenglykolmonomethylether und 80 g Xylol zugegeben. Nach einer Gesamtreaktionszeit von 90 min bei 60 °C werden das Lösungsmittel sowie überschüssiges Isophorondiisocyanat destillativ entfernt.

Man erhält 344,6 g Umsetzungsprodukt mit einer Isocyanatzahl von 164,5 und einem Restgehalt Isophorondiisocyanat von 0,7 %.

### Beispiel 2

In der Anordnung aus Beispiel 1 werden 666 g (3 mol) Isophorondiisocyanat und 0,2 g Dibutylzinndilaurat auf 60 °C erhitzt. Innerhalb von 15 min wird eine Lösung von 1002 g Polyethylenglykolmonomethylether (mittleres Molgewicht = 2004 g) und 668 g Xylol zugegeben. Die Alkohol/Xylol-Lösung wird vor der Zugabe auf 60 °C erwärmt und bei dieser Temperatur zugegeben. Nach einer Gesamtreaktionszeit von 90 min bei 60 °C werden das Lösungsmittel sowie überschüssiges Isophorondiisocyanat destillativ entfernt.

Man erhält 1116,1 g Umsetzungsprodukt mit einer Isocyanatzahl von 25,8 und einem Restgehalt Isophorondiisocyanat von 0,28 %.

### Beispiel 3

In einem 1 Liter-Dreihalskolben, der mit Kühler, Tropftrichter und Rührer ausgestattet ist, wird eine Lösung von 331,5 g eines Epoxidharzes auf Basis von Bisphenol-A mit einem Epoxidwert von 2,1 mol/kg und 83 g Xylol auf 60 °C erhitzt.

Innerhalb von 30 min wird eine Lösung von 2,21 g des Umsetzungsproduktes aus Beispiel 1 und 43,3 g des Umsetzungsproduktes aus Beispiel 2 sowie 95,5 g Xylol bei 60 °C zugegeben. Nach einer Gesamtreaktionszeit von 90 min bei 60 °C wird das Lösungsmittel destillativ entfernt.

Man erhält 377 g Umsetzungsprodukt mit einem Epoxidwert von 1,84 mol/kg.

### Beispiel 4

200 g des Umsetzungsproduktes aus Beispiel 3 werden mit 40 g Methoxypropanol auf 70 °C erwärmt und innerhalb von 4 min bei 18 U/s mit 160 g vollentsalztem Wasser versetzt.

Man erhält eine stabile Dispersion mit einer Viskosität (Haake Rotationsviskosimeter Drehkörper MVI, 64 Umdrehungen/min) von 1,1 Pa·s bei 25 °C.

### Beispiel 5

In der Anordnung aus Beispiel 3 werden 250 g eines Epoxidharzes auf Basis Bisphenol-A mit einem Epoxidwert von 2,1 mol/kg und 83 g Xylol auf 60 °C erhitzt und innerhalb von 40 min 192 g des Umsetzungsproduktes aus Beispiel 1 zugegeben. Nach einer Gesamtreaktionszeit von 90 min wird das Lösungsmittel destillativ entfernt.

Man erhält 442 g Umsetzungsprodukt mit einem Epoxidwert von 1,18 mol/kg.

### Beispiel 6

In der Anordnung aus Beispiel 1 werden 250 g eines Epoxidharzes auf Basis Bisphenol-A mit einem Epoxidwert von 2,1 mol/kg und 83 g Xylol auf 60 °C erhitzt.

Innerhalb von 20 min wird eine 60 °C warme Lösung von 1228 g des Umsetzungsproduktes aus Beispiel 2 und 819 g Xylol zugegeben.

Nach einer Gesamtreaktionszeit von 90 min wird das Lösungsmittel destillativ entfernt.

Man erhält 1478 g Umsetzungsprodukt mit einem Epoxidwert von 0,35 mol/kg.

### Beispiel 7

In der Anordnung aus Beispiel 3 werden 220 g eines Epoxidharzes auf Basis Bisphenol-A mit einem Epoxidwert von 2,1 mol/kg sowie 30 g des Umsetzungsproduktes aus Beispiel 6, 20 g des Umsetzungsproduktes aus Beispiel 5 und 54 g Methoxypropanol bei 70 °homogenisiert. Die Mischung wird bei 18 U/s mit 216 g vollentsalztem Wasser innerhalb von 6 min versetzt.

Man erhält eine stabile Dispersion mit einer Viskosität (gemessen analog Beispiel 4) von 1,4 Pa·s bei 25 °C.

### Beispiel 8

In einem 4-Liter-Dreihalskolben (Rückflußkühler, Rührer) werden 1850 g Isophorondiiosocyanat und 3,7 g DBTL bei 60 °C homogenisiert und mit 1000 g eines wasserfreien Polyethylenglykolmonomethylethers (OH-Zahl: 467) während 1 h kontinuierlich versetzt.

Nach dem Abkühlen erhält man ein Umsetzungsprodukt mit einer NCO-Zahl von 156.

### Beispiel 9

Es wird die Anlage aus Beispiel 8 verwendet. 500 g Isophorondiisocyanat und 1 g Diazabicyclo[2,2,2]octan werden bei 65 °C homogenisiert. Innerhalb von 90 min wird bei 60 °C eine Mischung (2500 g) aus wasserfreiem Polyethylenglykolmonomethylether (OH-Zahl: 75) und wasserfreiem Xylol (32,6 %) zugesetzt. Nach einer Reaktionszeit von 60 min wird das Lösungsmittel entfernt. Das Reaktionsprodukt wird durch eine NCO-Zahl von 54 charakterisiert.

### Beispiel 10

Es wird die Anlage aus Beispiel 8 verwendet. 250 g Isophorondiisocyanat und 0,4 g Diazabicyclo[2,2,2]octan sowie 0,3 g DBTL werden bei 55 °C homogenisiert. Innerhalb von 60 min werden 3700 g einer Mischung aus wasserfreiem Polyethylenglykolmonomethylether (OH-Zahl: 28) und Xylol (39 %) zugesetzt. Nach 40 min Reaktionszeit wird das Lösungsmittel entfernt. Das Reaktionsprodukt wird durch die NCO-Zahl 23 charakterisiert.

### Beispiel 11

In der Anlage aus Beispiel 8 werden 2016 g Hexamethylendiisocyanat und 3 g DBTL sowie 1,5 g Diazabicyclo[2,2,2]octan bei 60 °C homogenisiert. Innerhalb von 30 min werden 1400 g einer Mischung aus wasserfreiem Polyethylenglykolmonomethylether (OH-Zahl: 75) und wasserfreiem Xylol (35,9 %) zugesetzt. Nach 70 minütiger Reaktionszeit werden die flüchtigen Anteile destillativ abgetrennt. Das Reaktionsprodukt hat eine Isocyanatzahl von 58.

### Beispiel 12

In der Anlage aus Beispiel 8 werden 1914 g Diisocyanatotoluol und 2,5 g DBTL sowie 2 g Diazabicyclo[2,2,2]octan bei 63 °C homogenisiert. Innerhalb von 35 min werden 1400 g einer Mischung aus wasserfreiem Polyethylenglykolmonomethylether (OH-Zahl: 76) und wasserfreiem Xylol (41,2 %) zugesetzt. Nach 45 min Reaktionszeit werden die flüchtigen Anteile destillativ entfernt. Die Isocyanatzahl des Reaktionsprodukts beträgt 59.

### Beispiel 13

In der Anlage aus Beispiel 8 werden 2250 g eines Novolakepoxidharzes (EP-Wert: 5,6 mol·kg⁻¹) mit 750 g Bisphenol-A und 5,3 g Tetraethylammoniumchlorid bei 100 °C homogenisiert. Bei 140 - 150 °C erfolgt die Umsetzung der Reaktanden zu einem Festharz mit einem Epoxidwert von 2,00 mol·kg⁻¹ und einer OH-Zahl von 123.

### Beispiel 14

In der Anlage aus Beispiel 8 werden 2184 g eines Bisphenol-A-Harzes (EP-Wert: 5,4 mol·kg⁻¹) und 616 g Bisphenol F sowie 5,1 g Tetraethylammoniumchlorid bei 110 °C homogenisiert. Bei 140 - 155 °C erfolgt die Umsetzung der Reaktanden zu einem Festharz mit einem Epoxidwert von 2,01 mol kg⁻¹ und einer OH-Zahl von 125.

### Beispiel 15

In der Anlage aus Beispiel 8 werden 2295 g eines Bisphenol-A-Harzes (EP-Wert: 5,45 mol·kg⁻¹) und 705 g Bisphenol-A mit 5,1 g Tetraethylammoniumchlorid bei 100 °C homogenisiert. Bei 145 - 155 °C erfolgt die Umsetzung zu einem Festharz mit einem Epoxidwert von 2,11 mol·kg⁻¹ und einer OH-Zahl von 115.

### Beispiel 16

In der Anlage aus Beispiel 8 werden 2220 g eines Bisphenol-F-Harzes (EP-Wert: 5,9 mol·kg⁻¹) und 780 g Bisphenol-A mit 5,5 g Tetraethylammoniumchlorid bei 100 °C homogenisiert. Bei 140 - 150 °C erfolgt die Umsetzung der Reaktanden zu einem Festharz mit einem Epoxidwert von 2,09 mol·kg⁻¹ und einer OH-Zahl von 128.

### Beispiel 17

In der Anlage aus Beispiel 8 werden 2232 g eines Bisphenol-A-Harzes (EP-Wert: 5,45 mol·kg⁻¹) mit 768 g Bisphenol-C und 5,5 g Tetraethylammoniumchlorid bei 100 °C homogenisiert. Bei 140 - 150 °C werden die Edukte zu einem Festharz mit einem Epoxidwert von 2,06 mol·kg⁻¹ und einer OH-Zahl von 114 umgesetzt.

### Beispiel 18

In der Anlage aus Beispiel 8 werden 1800 g des Epoxidharzes aus Beispiel 13 und 600 g wasserfreies Xylol bei 65 °C homogenisiert. Innerhalb von 30 min wird eine Mischung aus 27,3 g des Isocyanats aus Beispiel 8, 46,5 g des Isocyanats aus Beispiel 9 und 106,4 g des Isocyanats aus Beispiel 10 gelöst in 100 g wasserfreiem Xylol zugegeben.

Nach 40 min Reaktionszeit wird das Lösungsmittel destillativ entfernt. Man erhält ein Harz mit 1,81 mol Epoxidgruppen pro kg.

### Beispiel 19

In der Anlage aus Beispiel 8 werden 1800 g des Harzes aus Beispiel 14 mit 700 g wasserfreiem Xylol bei 60 °C homogenisiert. Innerhalb von 45 min wird eine Mischung aus 22,5 g des Isocyanats aus Beispiel 8, 32 g des Isocyanats aus Beispiel 9 und 73 g des Isocyanats aus Beispiel 10 gelöst in 90 g wasserfreiem Xylol zugegeben. Nach 30 min Reaktionszeit wird das Lösungsmittel entfernt. Man erhält ein Harz mit einem Epoxidwert von 1,88 mol·kg⁻¹.

### Beispiel 20

In der Anlage aus Beispiel 8 werden 1700 g des Harzes aus Beispiel 15 mit 700 g wasserfreiem Xylol bei 60 °C homogenisiert. Innerhalb von 40 min wird eine Mischung aus 21 g des Isocyanats aus Beispiel 8, 28,4 g des Isocyanats aus Beispiel 11 und 69 g des Isocyanats aus Beispiel 10 gelöst in 95 g wasserfreiem Xylol zugegeben. Nach 30 min Reaktionszeit wird das Lösungsmittel entfernt. Man erhält ein Harz mit einem Epoxidwert von 1,86 mol·kg⁻¹.

### Beispiel 21

In der Anlage aus Beispiel 8 werden 1900 g des Harzes aus Beispiel 16 und 600 g wasserfreies Xylol bei 60 °C homogenisiert. Innerhalb von 40 min wird eine Mischung aus 14,9 g des Isocyanats aus Beispiel 8, 40,2 g des Isocyanats aus Beispiel 12 und 96,8 g des Isocyanats aus Beispiel 10 gelöst in 120 g wasserfreiem Xylol zugegeben. Nach 30 min Reaktionszeit wird das Lösungsmittel entfernt. Man erhält ein Harz mit einem Epoxidwert von 1,91 mol·kg⁻¹.

### Beispiel 22

In der Anlage aus Beispiel 8 werden 1900 g des Harzes aus Beispiel 17 mit 700 g wasserfreiem Xylol bei 65 °C homogenisiert. Innerhalb von 30 min wird eine Mischung aus 26 g des Isocyanats aus Beispiel 8, 70 g des Isocyanats aus Beispiel 12 und 118 g des Isocyanats aus Beispiel 10 gelöst in 130 g wasserfreiem Xylol zugegeben. Nach 40 min Reaktionszeit wird das Lösungsmittel entfernt. Man erhält ein Harz mit einem Epoxidwert von 1,85 mol·kg⁻¹.

### Beispiel 23

In der Anlage aus Beispiel 8 werden 1800 g des Harzes aus Beispiel 15 mit 600 g wasserfreiem Xylol bei 65 °C homogenisiert. Innerhalb von 35 min wird eine Mischung von 48,4 g des Isocyanats aus Beispiel 8, 68,8 g des Isocyanats aus Beispiel 9 und 157 g des Isocyanats aus Beispiel 10 zugegeben. Die Temperatur der Mischung wird auf 65 °C eingestellt. Nach 35 min Reaktionszeit wird das Lösungsmittel entfernt. Man erhält ein Harz mit einem Epoxidwert von 1,83 mol·kg⁻¹.

### Beispiel 24

In einem 65 Liter-Edelstahlreaktor, ausgerüstet mit einem handelsüblichen Doppelwendelrührer, einem Brüdenrohr, Kondensator, einer doppelten Destillatnachlage, einer Vakuumpumpe und einer Mantelheizung, wird eine Mischung aus 20 kg des Harzes aus Beispiel 15 mit 7 kg wasserfreiem Xylol bei 65 °C mit einer Rührgeschwindigkeit von 80 Umdrehungen/min homogenisiert. Innerhalb von 60 min wird eine 65 °C warme Mischung von 666 g des Isocyanats aus Beispiel 8, 946 g des Isocyanats aus Beispiel 9 und 2163 g des Isocyanats aus Beispiel 10 zugegeben. Nach einer Reaktionszeit von 45 min wird das Lösungsmittel entfernt. Man erhält ein Harz mit einem Epoxidwert von 1,76 mol·kg⁻¹.

### Beispiel 25

In der Anordnung aus Beispiel 3 werden 250 g des Harzes aus Beispiel 20 mit 20 g Isopropanol und 30 g Methoxypropanol bei 75 °C homogenisiert und innerhalb von 5 min mit 200 g 70 °C warmem vollentsalztem Wasser versetzt. Man erhält eine stabile Dispersion mit einer Viskosität von 520 mPa·s bei 25 °C (gemessen mit Haake Rotationsviskosimeter Drehkörper MVI, Rotationsgeschwindigkeit 128 Umdrehungen/min).

### Beispiel 26

In der Anordnung aus Beispiel 24 mit angeschlossener Dispergiereinrichtung (Supraton S200 mit Kammerwerkzeug, Fa. Krupp, Essen) werden 20 kg des Harzes aus Beispiel 24 mit 1600 g Benzylalkohol und 2400 g Methoxypropanol bei 80 °C homogenisiert. Innerhalb von 10 min werden bei laufendem Dispergator 12000 g auf 80 °C erwärmtes und vollentsalztes Wasser zugegeben und mit anschließender 10minütiger Dispergierzeit bei 5400 Umdrehungen/min die Dispergierung vervollständigt.

Man erhält eine stabile wässrige Dispersion mit einer Viskosität von 160 mPa·s bei 25 °C und einer Rotationsgeschwindigkeit von 256 Umdrehungen/min mit dem Drehkörper MVI.

### Beispiel 27

180 Masseteile der Dispersion des Beispiels 24 werden mit 68,5 Masseteilen einer wässrigen Polyaminadduktlösung (Addukt auf Basis von Bisphenol-A-diglycidylether (Epoxidwert: 0,54) und einem aliphatischen Diamin gemischt; Aminzahl des Adduktes: 110). Die Viskosität wird mit 64 Masseteilen Wasser auf 1 Pa·s eingestellt. Während 90 min bleibt die Viskosität der Mischung konstant. Nach 120 min steigt die Viskosität um 50 % und nach 150 min um weitere 50 % (jeweils bezogen auf den Startwert) an.

### Beispiel 28

100 g der Dispersion aus Beispiel 24 werden mit 16,5 g eines Polyaminaddukthärters (Addukt auf Basis Bisphenol-A-digylcidylether (Epoxidwert: 0,54) und einem alicyclischen Amin; Aminzahl des Adduktes: 220; EUREDUR^{R} 36, Warenzeichen der SCHERING AG) und 13,5 g Wasser gemischt. Die Viskosität der Mischung ist 1 Pa·s. Die Viskosität der Mischung bleibt 3 h unverändert und steigt dann um 30 - 50 % an.

### Beispiel 29

100 g der Mischung aus Beispiel 28 werden mit 35 g BaSO₄ und 35 g TiO₂ pigmentiert. Die Viskosität der Mischung bleibt 3 h konstant (1,5 P^{a}·s).

### Beispiel 30

Die Mischung aus Beispiel 28 wird mit einer 40 µm Spirale als Film aufgetragen. Nach 4,5 min ist der Film staubtrocken (DIN 53150). Die Filmdicke beträgt 12 µm.

### Beispiel 31

Die Mischung aus Beispiel 29 wird mit einer 40 um Spirale als Film aufgetragen. Nach 4 min ist der Film staubtrocken. Die Filmdicke beträgt 12 µm.

### Beispiel 32

Die Mischung aus Beispiel 28 wird mit einer 60 µm Spirale aufgetragen. Die mechanische Festigkeit des bei Raumtemperatur gehärteten Films (DIN 53153) beträgt 43 nach 24 h, 50 nach 48 h, 54 nach 72 h und 58 nach 168 h.
Wenn die Härtung bei 5 °C durchgeführt wird, steigt der Wert von 37 nach 24 h auf 41 nach 168 h an. Die Härtung bei 10 °C liefert nach 24 h 39 und nach 168 h 44.

### Beispiel 33

Die Mischung aus Beispiel 28 wird mit einer 60 µm Spirale aufgetragen. Nach 7 Tagen Härtung bei Raumtemperatur wird die Erichsen-Tiefung (DIN 53156) zu 9,1 mm bestimmt.

### Beispiel 34

In der Anlage aus Beispiel 8 werden 1200 g eines Bisphenol-A-Harzes (EP-Wert: 2,1 mol/kg) und 400 g wasserfreies Xylol bei 70 °C homogenisiert. Innerhalb von 30 min wird eine Mischung aus 40 g des Isocyanats aus Beispiel 8, 56,8 g des Isocyanats aus Beispiel 9 und 129,8 g des Isocyanats aus Beispiel 10 gelöst in 120 g wasserfreiem Xylol zugegeben. Nach 30 min Reaktionszeit wird das Lösungsmittel destillativ entfernt. Man erhält ein Harz mit 1,8 mol Epoxidgruppen pro kg.

### Beispiel 35

600 g des Harzes aus Beispiel 34 werden bei 85 °C mit 36 g Benzylalkohol homogenisiert. Bei 85 °C werden 440 g vollentsalztes Wasser innerhalb von 7 min zugegeben (66 U/s).

Man erhält eine stabile Dispersion mit einer Viskosität von 630 mPa·s bei 25 °C.

### Beispiel 36

600 g des Harzes aus Beispiel 34 werden bei 90 °C mit 480 g vollentsalztem Wasser innerhalb von 5 min bei 85 U/s dispergiert.

Die Viskosität der stabilen Dispersion ist 610 mPa·s bei 25 °C.

## Patentansprüche

1. Verbindungen der allgemeinen Formel I 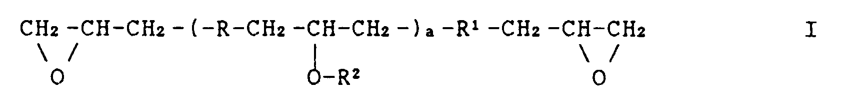 worin bedeuten R, R¹ unabhängig voneinander 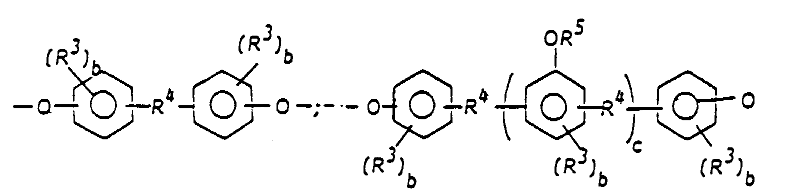 mit
R³ = C₁₋₃-Alkylresten,
R⁴ = C₁₋₄-Alkylenresten,
R⁵ = 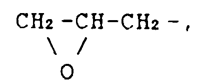
b = unabhängig voneinander eine Zahl von 0 - 4,
c = 1 - 10,
a = 1 bis 20
R₂ = H und mindestens einmal der Rest 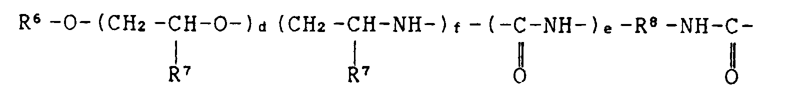 mit
R⁶ = C₁₋₅-Alkylrest
R⁷ = H oder CH₃-
d = 1 - 100
e = 0 oder 1
f = 0 oder 1
R⁸ = aliphatischer, cyclischer, alicyclischer, aromatischer, araliphatischer Kohlenwasserstoffrest.

2. Verbindungen der allgemeinen Formel I, worin R, R¹ die Reste des Bis-(4,4'-hydroxyphenyl)-methans und/oder 2,2-Bis-(4,4'-hydroxyphenyl)-propans sind, mit a = 2 - 10 und R² der Rest 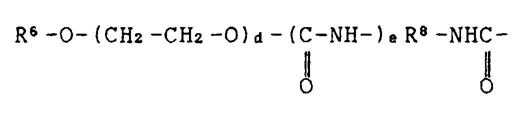 mit R⁶ = CH₃- oder C₂H₅-, d = 2 - 50, e = 1 und R⁸ der Rest des 3,3,5-Trimethyl-1-isocyanato-5-isocyanatomethyl-cyclohexans, des 2,4(2,6)-Diisocyanatomethyl-benzols oder -(CH₂)₆- ist.

3. Verbindungen gemäß den Ansprüchen 1 und 2, herstellbar durch Umsetzung von Monoalkylethern von Polyoxyalkylendiolen mit difunktionellen Isocyanaten im Molverhältnis von 1 : 1 - 1 : 6 in erster Stufe, gegebenenfalls unter Mitverwendung von Katalysatoren und Lösungsmitteln, bei Temperaturen von 40 - 100 °C, gegebenenfalls Abtrennung des überschüssigen Diisocyanats und Lösungsmittels, und weitere Umsetzung des Isocyanatgruppen enthaltenden Monourethans in zweiter Stufe mit Di- und/oder Polyglycidylethern auf Basis von Bisphenolen oder Novolaken im Molverhältnis von 1 : 1 bis a : 1 bei Temperaturen von 40 - 100 °C, gegebenenfalls unter Mitverwendung von Katalysatoren und Lösungsmitteln.

4. Verbindungen gemäß den Ansprüchen 1 und 2, herstellbar durch Umsetzung von Monoalkylethern von Polyoxyalkylenmonoisocyanaten der allgemeinen Formel 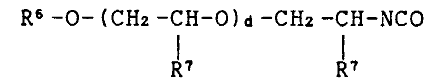 worin R⁶/R⁷ und d die oben angegebene Bedeutung haben, mit Di- und/oder Polyglycidylethern auf Basis von Bisphenolen oder Novolaken im Molverhältnis von 1 : 1 bis a : 1 bei Temperaturen von 40 - 100 °C, gegebenenfalls unter Mitverwendung von Katalysatoren und/oder Lösungsmitteln.

5. Wasserdispergierbare Mischung, enthaltend mindestens eine der Verbindungen gemäß den Ansprüchen 1 bis 3 und gegebenenfalls ein oder mehrere Di- oder Polyglycidylether auf Basis von Bisphenolen und/oder Novolaken und gegebenenfalls Lösungsmitteln.

6. Wässrige Dispersion, enthaltend mindestens eine der Verbindungen der Ansprüche 1 bis 3, gegebenenfalls ein oder mehrere Di- oder Polyglycidylether auf Basis von Diphenolen und/oder Novolaken und gegebenenfalls Lösungsmitteln, Verlaufsmitteln, Entschäumer, Pigmente, Farbstoffe und Wasser.

7. Härtbare Mischung, enthaltend mindestens eine der Verbindungen der Ansprüche 1 bis 3, mindestens ein Härtungsmittel für Glycidylverbindungen und gegebenenfalls ein oder mehrere Di- oder Polyglycidylether auf Basis von Bisphenolen und/oder Novolaken, gegebenenfalls Lösungsmitteln, Hilfs- und Zusatzstoffen und Wasser.

## Claims

1. Compounds of the general formula I 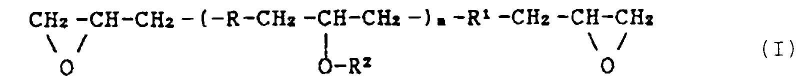 wherein R and R¹ are each independently of the other 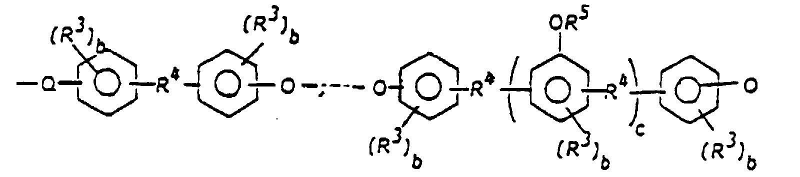 wherein
R³ = C₁-C₃-alkyl radicals,
R⁴ = C₁-C₄-alkylene radicals,
R⁵ = 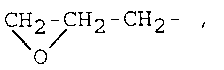 each b, independently of the others, is an integer of from 0 to 4,
c = 1-10,
a = 1 to 20,
R² = H and at least once the radical 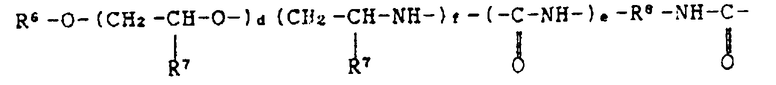 wherein
R⁶ = a C₁-C₅-alkyl radical,
R⁷ = H or CH₃-,
d = 1-100,
e = 0 or 1,
f = 0 or 1,
R⁸ = an aliphatic, cyclic, alicyclic, aromatic or araliphatic hydrocarbon radical.

2. Compounds of the general formula I, in which R, R¹ represent the radicals of bis-(4,4'-hydroxyphenyl)-methane and/or of 2,2-bis-(4,4'-hydroxyphenyl)-propane, wherein a = 2-10 and R² represents the radical 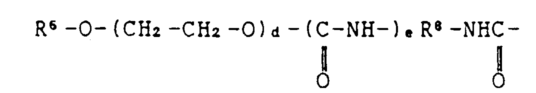 in which R⁶ = CH₃- or C₂H₅-, d = 2-50, e = 1 and R⁸ represents the radical of 3,3,5-trimethyl-1-isocyanato-5-isocyanatomethyl-cyclohexane, of 2,4(2,6)-diisocyanatomethyl-benzene or -(CH₂)₆-.

3. Compounds according to claims 1 and 2, which can be prepared by, in a first step, reacting monoalkyl ethers of polyoxyalkylenediols with difunctional isocyanates in a molar ratio of from 1:1-1:6, optionally with the co-use of catalysts and solvents, at temperatures of from 40 to 100°C, optionally removing excess diisocyanate and solvent and, in a second step, further reacting the isocyanate group-containing monourethane with di- and/or poly-glycidyl ethers based on bisphenols or novolaks in a molar ratio of from 1:1 to a:1 at temperatures of from 40 to 100°C, optionally with the co-use of catalysts and solvents.

4. Compounds according to claims 1 and 2, which can be prepared by reacting monoalkyl ethers of polyoxyalkylene monoisocyanates of the general formula 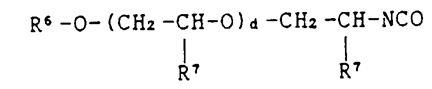 wherein R⁶/R⁷ and d are as defined above, with di- and/or poly-glycidyl ethers based on bisphenols or novolaks in a molar ratio of from 1:1 to a:1 at temperatures of from 40 to 100°C, optionally with the co-use of catalysts and/or solvents.

5. Water-dispersible mixture, containing at least one of the compounds according to claims 1 to 3 and optionally one or more di- or poly-glycidyl ethers based on bisphenols and/or novolaks, and optionally solvents.

6. Aqueous dispersion, containing at least one of the compounds of claims 1 to 3, optionally one or more di- or poly-glycidyl ethers based on diphenols and/or novolaks, and optionally solvents, flow-control agents, defoamers, pigments, dyes and water.

7. Curable mixture, containing at least one of the compounds of claims 1 to 3, at least one curing agent for glycidyl compounds and optionally one or more di- or poly-glycidyl ethers based on bisphenols and/or novolaks, and optionally solvents, adjuvants and additives and water.

## Revendications

1. Composés de formule générale I 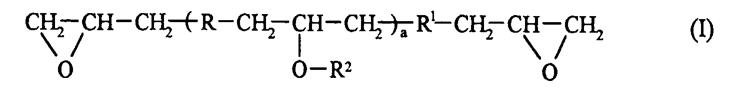 dans laquelle R et R¹ représentent indépendamment l'un de l'autre 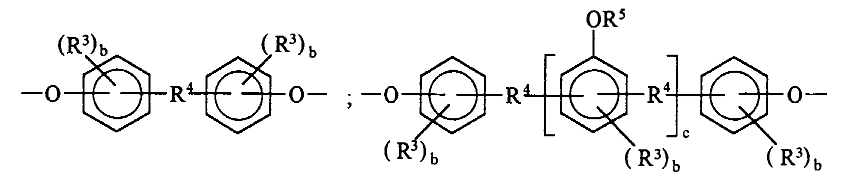 où
R³ est un reste alkyle en C₁-C₃,
R⁴ est un reste alkylène en C₁-C₄,
R⁵ est 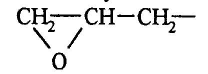 les b sont indépendamment les uns des autres des nombres de 0 à 4,
c est un nombre de 1 à 10,
a est un nombre de 1 à 20
R² est H et au moins une fois le reste 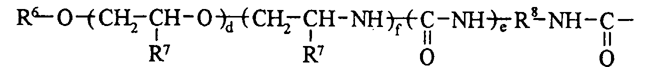 où
R⁶ est un reste alkyle en C₁-C₅
R⁷ est H ou CH₃
d = 1 à 100
e = 0 ou 1
f = 0 ou 1
R⁸ est un reste hydrocarboné aliphatique, cyclique, alicyclique, aromatique, araliphatique.

2. Composés de formule générale I, dans lesquels R et R¹ sont les restes du bis(4,4'-hydroxyphényl)méthane et/ou du 2,2-bis(4,4'-hydroxyphényl)propane, a est un nombre de 2 à 10, et R² est le reste 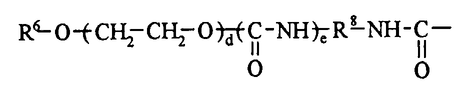 où R⁶ est CH₃ ou C₂H₅, d est un nombre de 2 à 50, e est égal à 1 et R⁸ est le reste du 3,3,5-triméthyl-1-isocyanato-5-isocyanatométhylcyclohexane, du 2,4(2,6)-diisocyanato-méthylbenzène ou -(CH₂)₆-.

3. Composés selon les revendications 1 et 2, pouvant être préparés par un procédé selon lequel on fait réagir dans une première étape des éthers monoalkyliques de polyoxyalkylènediols avec des isocyanates bifonctionnels dans un rapport molaire de 1 : 1 à 1 : 6, éventuellement en présence de catalyseurs et de solvants à des températures de 40 à 100°C, on sépare éventuellement le diisocyanate en excès et le solvant, puis on fait réagir dans une deuxième étape le mono-uréthane contenant des groupes isocyanate avec des éthers de diglycidyle et/ou de polyglycidyle à base de bisphénols ou de novolaques dans un rapport molaire de 1 : 1 à a : 1 à des températures de 40 à 100°C, éventuellement en présence de catalyseurs et de solvants.

4. Composés selon les revendications 1 et 2, pouvant être préparés par un procédé selon lequel on fait réagir des éthers monoalkyliques de monoisocyanates de polyoxyalkylène de formule générale 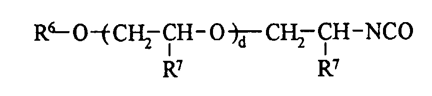 où R⁶, R⁷ et d ont la signification donnée ci-dessus, avec des éthers de di- et/ou polyglycidyle à base de bisphénols ou de novolaques dans un rapport molaire de 1 : 1 à a : 1 à des températures de 40 à 100°C, éventuellement en présence de catalyseurs et/ou de solvants.

5. Mélange dispersable dans l'eau, contenant au moins un des composés selon les revendications 1 à 3 et éventuellement un ou plusieurs éthers de di- ou polyglycidyle à base de bisphénols et/ou de novolaques et éventuellement des solvants.

6. Dispersion aqueuse, contenant au moins un des composés selon les revendications 1 à 3, éventuellement un ou plusieurs éthers de di- ou polyglycidyle à base de diphénols et/ou de novolaques et éventuellement des solvants, des agents nivelants, des antimousses, des pigments, des colorants, et de l'eau.

7. Mélange durcissable, contenant au moins un des composés des revendications 1 à 3, au moins un durcisseur pour composés glycidylés et éventuellement un ou plusieurs éthers de di- ou polyglycidyle à base de bisphénols et/ou de novolaques, éventuellement des solvants, des agents auxiliaires et des additifs, et de l'eau.
